**Europäisches Patentamt**

**European Patent Office**

**Office européen des brevets**

(19)

(11) Veröffentlichungsnummer : **0 057 883**
**B1**

(12)

# EUROPÄISCHE PATENTSCHRIFT

(45) Veröffentlichungstag der Patentschrift :
28.11.84

(51) Int. Cl.³ : **F 16 D 65/54**

(21) Anmeldenummer : **82100665.7**

(22) Anmeldetag : **30.01.82**

(54) **Ausgleichseinrichtung für eine Scheibenbremse.**

(30) Priorität : **09.02.81 DE 3104452**

(43) Veröffentlichungstag der Anmeldung :
**18.08.82 Patentblatt 82/33**

(45) Bekanntmachung des Hinweises auf die Patenterteilung : **28.11.84 Patentblatt 84/48**

(84) Benannte Vertragsstaaten :
**AT CH DE FR GB IT LI NL SE**

(56) Entgegenhaltungen :
**DE-A- 2 610 651**
**DE-A- 2 709 762**
**FR-A- 1 398 693**
**FR-E- 76 776**
**US-A- 4 058 084**

(73) Patentinhaber : **WABCO Westinghouse Fahrzeug-bremsen GmbH**
**Am Lindener Hafen 21 Postfach 91 12 80**
**D-3000 Hannover 91 (DE)**

(72) Erfinder : **Reinecke, Erich**
**Kastanieneck 6**
**D-3167 Burgdorf (DE)**
Erfinder : **Isernhagen, Fritz**
**Kleine Heide 56**
**D-3050 Wunstorf 1 (DE)**

(74) Vertreter : **Schrödter, Manfred**
**WABCO Westinghouse Fahrzeugbremsen GmbH Am Lindener Hafen 21 Postfach 91 12 80**
**D-3000 Hannover 91 (DE)**

Jouve, 18, rue St-Denis, 75001 Paris, France

## Beschreibung

Die Erfindung betrifft eine Ausgleichseinrichtung zum Ausgleich einer durch Bremsbelagverschleiß entstandenen Vergrößerung des Lüftspiels einer aus zwei gegeneinander verschiebbaren Spreizelementen bestehenden Betätigungseinrichtung für eine Scheibenbremse gemäß dem Oberbegriff des Anspruchs 1.

Die Betätigungseinrichtung einer Scheibenbremse besteht in der Regel aus zwei gegeneinander betätigbaren Spreizelementen, mittels deren Spreizbewegung eine Anpressung von wenigstens einem Bremsbelag an eine Bremsscheibe erfolgt. Zwecks Ausgleichs einer durch Bremsbelagverschleiß entstandenen Vergrößerung des Lüftspiels der Spreizelemente hat es sich als vorteilhaft erwiesen, zwischen den Spreizelementen eine Ausgleichseinrichtung vorzusehen, deren Wirkungsweise derart ist, daß ein über den vorgegebenen Hub der Relativbewegung zwischen den Spreizelementen infolge Belagverschleiß hinausgehender Hub automatisch korrigiert wird.

Aus der FR-E-76 776 zu FR-A-1 227 387) ist es bekannt, zwischen den Spreizelementen eine Klemmeinrichtung anzuordnen, die sich in dem einen Spreizelement zwischen zwei Anschlägen um den vorgegebenen Hub der Relativbewegung frei verschieben kann und die im anderen Spreizelement festgeklemmt ist.

Überschreitet die Relativbewegung der Spreizelemente bei einer Bremsbetätigung den vorgegebenen Hub, so wird die Wirkung der Klemmeinrichtung überwunden und der zur Bremsbetätigung zusätzlich erforderliche Hub der Relativbewegung ermöglicht.

Beim Lösen der Bremse werden die Spreizelemente durch die Rückverformung und den Reibschluß eines die Spreizelemente gegeneinander abdichtenden Dichtelements um den vorgegebenen Hub zurückgeschoben, ohne daß der zusätzlich zurückgelegte Hub ebenfalls zurückgestellt wird.

Eine Ausgleichseinrichtung ähnlich der der eingangs genannten Art ist durch die DE-A-2 709 762 bekannt. Diese bekannte Ausgleichseinrichtung stellt über ein Verbindungsglied eine Verbindung zwischen den beiden Spreizelementen her, indem das Verbindungsglied sich über eine zusätzliches Federelement gegen das eine der beiden Spreizelemente abstützt und mit dem anderen der beiden Spreizelemente über ein gesondertes Reibelement in Wirkverbindung steht. Die Abstützung gegen das eine der beiden Spreizelemente mittels eines Federelementes erfolgt derart, daß die Federkraft der Relativbewegung der Spreizelemente beim Anpressen des Bremsbelages entgegenwirkt. Bei dieser Bauweise der Ausgleichseinrichtung ist neben den beiden zusätzlichen Elementen, d. h. neben dem Reibelement und dem Federelement, ein drittes Bauelement, nämlich eine Verbindungshülse zur Sicherung des Federelementes erforderlich.

Da das Federelement bei der erwähnten bekannten Ausgleichseinrichtung aus einer Spiralfeder besteht, muß diese große Dimensionen aufweisen, da verhältnismäßig große Kräfte erforderlich sind, um die Spreizelemente aus ihrer Spreiz- bzw. Bremsstellung in ihre Bremslösestellung zurückzuführen. Um diese Rückstellkraft zu vergrößern, ist in einem Ausführungsbeispiel der erwähnten DE-A-2 709 762 eine zusätzliche Spiralfeder angeordnet.

Eine Ausgleichseinrichtung der eingangs genannten Art ist durch die US-PS 4 058 084 bekannt.

Dabei handelt es sich um eine Ausgleichseinrichtung mit einem zweiteiligen, aus einem auch Dichtungsfunktionen übernehmenden Reibelement und einer Feder bestehenden Verbindungsglied, welches in einer radialen Nut des einen Spreizelementes angeordnet ist, wobei die axialen Flanken der Nut Anschläge für das Verbindungsglied bilden.

Das Reibelement steht mit dem anderen Spreizelement über Reibschluß in Verbindung.

Bei gelöster Bremse drückt die Feder das Reibelement gegen den zweiten Anschlag. Beim Betätigen der Bremse wird das Reibelement über die reibschlüssige Verbindung von dem anderen Spreizelement mitgenommen, wobei es sich von dem zweiten Anschlag löst und die Feder gegen den ersten Anschlag zusammendrückt. Wenn die Feder zu Block gegangen ist, rutscht bei weiterer Verschiebung in Betätigungsrichtung das andere Spreizelement gegenüber dem Reibelement durch.

Beim Lösen der Bremse drückt die Feder das Reibelement um ihren vorangegangenen Verformungshub gegen den einen Anschlag zurück, wobei auch das andere Spreizelement durch die reibschlüssige Verbindung um den vorherigen Verformungshub der Feder zurückgestellt wird. Die von dem anderen Spreizelement gegenüber dem Reibelement durchrutschend zurückgelegte Verschiebung bleibt erhalten und wird so ausgeglichen.

Die vorstehend beschriebene Ausgleichseinrichtung mit einem zweiteiligen Verbindungsglied ist aufwendig.

Der vorliegenden Erfindung liegt deshalb die Aufgabe zugrunde, eine Ausgleichseinrichtung der eingangs genannten Art mit einfachen Mitteln so zu verbessern, daß sie aus einfach zu bearbeitendem Rohmaterial kostengünstiger hergestellt werden kann.

Diese Aufgabe wird durch die im Anspruch 1 aufgeführte Erfindung gelöst.

Durch die erfindungsgemäße Ausgestaltung der Ausgleichseinrichtung, welche aus einem einzigen Teil besteht, werden u. a. folgende Vorteile erzielt :

— kostengünstige Fertigung durch Einteiligkeit und einheitliches Material

— Fertigung aus Flachmaterial
— Einfache Anbringung von Vorsprüngen und Verjüngungen
— Verwendung von flachem Bandmaterial mit in beliebiger Zahl angeformten Vorsprüngen
— Verwendung sowohl in Vollbelag-Scheibenbremsen als auch in Teilbelag-Scheibenbremsen
— Verwendung in mechanisch, pneumatisch und hydraulisch betätigten Scheibenbremsen
— Wirkung der als Federelement ausgebildeten Vorsprünge sinngemäß als Tellerfeder und somit große Federkraft.

Vorteilhafte Weiterbildungen und Ausgestaltungen der Erfindung sind den Unteransprüchen zu entnehmen, wobei die in den Unteransprüchen 9 und 10 aufgezeigte Ausführungsform beim Einbau in hydraulisch betätigte Scheibenbremsen u. a. die folgenden Vorteile ergibt.

Die Rückstellung der Spreizelemente bei normalem Bremshub erfolgt bekannterweise bei den hydraulischen Scheibenbremsen in der Regel durch besonders gestaltete Dichtringe, d. h. diese Dichtringe erfüllen eine Dreifach-Funktion, nämlich die eigentliche Abdichtfunktion der Druckräume, die normale Rückstellfunktion und die zusätzliche Verschleiß-Nachstellfunktion. Diese drei Funktionen überfordern jedoch häufig die Dichtringe, so daß Probleme, wie zu geringe Rückstellung und somit Restmomente in der Bremse, zu große Rückstellung (keine Nachstellung) und somit zu großer Betätigungshub und infolge der besonderen Gestaltung (Rückstellfunktion) zu hohe Leckverluste, auftreten können.

Durch den Einbau der erfindungsgemäßen Ausgleichseinrichtung in eine hydraulische Betätigungseinrichtung gemäß Unteranspruch 9 ist vorwiegend nur eine Funktion der Dichtringe gemäß ihren eigentlichen Abdichtfunktionen erforderlich, da die Rückstell- und Nachstellfunktionen von der Ausgleichseinrichtung wahrgenommen werden. Durch die Ausgestaltung der Spreizelemente in ineinandergreifender Bauweise werden die Abmessungen der Betätigungseinrichtung kleiner, was bei dem ohnehin schon kleinen Platzangebot in den Scheibenbremsen einen weiteren Vorteil ergibt.

Die Erfindung wird nachfolgend an Hand von Ausführungsbeispielen, die in der Zeichnung dargestellt sind, näher erläutert. Es zeigen :
Figur 1 eine Vollbelag-Scheibenbremse, deren Betätigungseinrichtung von ineinandergreifenden Spreizelementen gebildet ist, mit einer aus einem Bauteil bestehenden Ausgleichseinrichtung,
Figur 2 die Ausgleichseinrichtung gemäß Fig. 1,
Figur 3 eine Ausgleichseinrichtung gemäß Fig. 2, jedoch mit gewellter Feder,
Figur 4 eine Ausgleichseinrichtung in spezieller Ausführung für eine Teilbelag-Scheibenbremse und
Figur 5 eine schematische Darstellung, gemäß Fig. 4 mit Hinweisen (Pfeilen) von Einbaumöglichkeiten,
Figur 6 eine Ausgleichseinrichtung gemäß Fig. 2, jedoch mit abgewinkelter Feder.

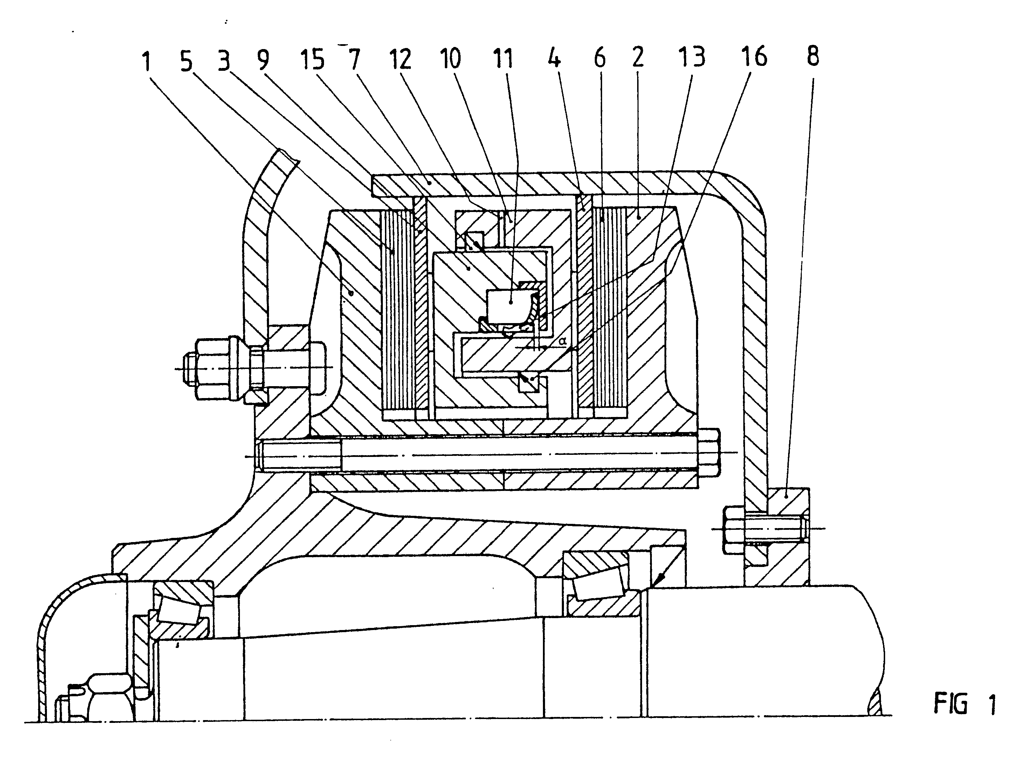

Gemäß Fig. 1 ist ein aus zwei Bremsscheiben 1, 2 bestehendes Gehäuse einer Vollbelag-Scheibenbremse mittels Schrauben an der Nabe einer nicht dargestellten Fahrzeugachse befestigt. Die feststehenden Teile der Bremse bestehen aus Bremsringen 3, 4 mit daran befestigten, beim Bremsen mit den umlaufenden Bremsscheiben 1, 2 in Reibschluß stehenden Bremsbelägen 5, 6, welche in Umlaufrichtung fest, axial frei beweglich an einem Bremsträger 7 aufgehängt sind, der am Achsflansch 8 befestigt ist.

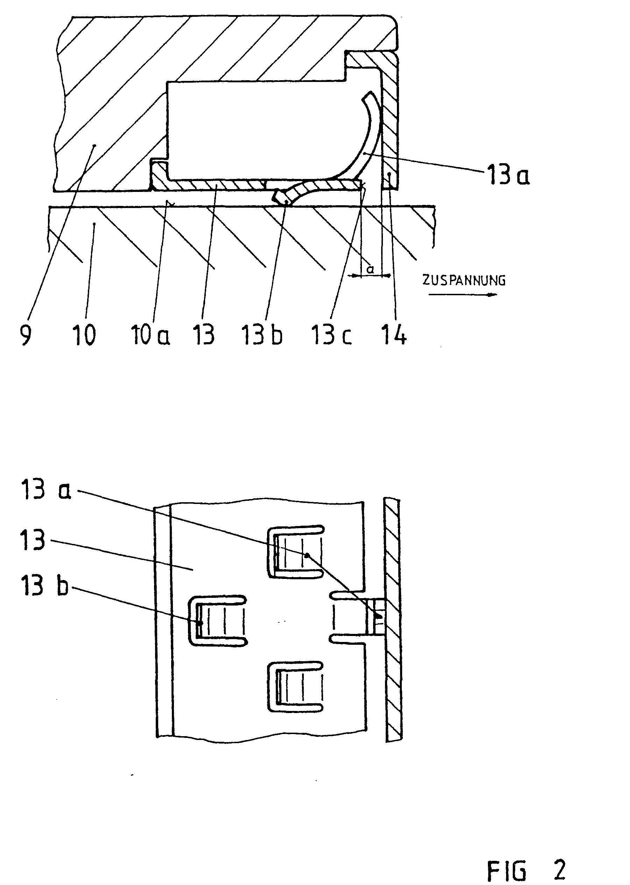

Die Betätigungseinrichtung der Bremse besteht aus zwei gegeneinander bewegbaren U-förmigen Spreizelementen 9, 10, deren U-Profile ineinandergreifen. Die Spreizhubbewegung ist durch einen innerhalb der Spreizelemente gelegenen Druckraum 11, dessen Beaufschlagung mit Druckmitteln über einen Anschluß 12 erfolgt, auslösbar. Eine zwischen den Spreizelementen 9, 10 im Druckraum 11 vorgesehene Ausgleichseinrichtung besteht aus einem hülsenförmigen konzentrisch zu den Spreizelementen 9, 10 angeordneten Verbindungsglied 13, welches gemäß Fig. 2 zwei verschiedene Formen von Vorsprüngen 13a, 13b aufweist. Die ersten Vorsprünge 13a sind als Federn ausgebildet, welche sich gegen einen ersten Anschlag 14 des einen Spreizelementes 9 bei einer Relativbewegung der Spreizelemente 9, 10 beim Anpressen der Bremsbeläge 5, 6 abstützen. Die zweiten Vorsprünge 13b sind als Reibelemente ausgebildet, die mit der Fläche 10a des anderen Spreizelementes 10 eine Verbindung herstellen. Die von den Reibelementen 13b auf das andere Spreizelement 10 ausgeübten Reibkräfte sind größer als die Federkräfte der federnden Vorsprünge 13a. In dem Ausführungsbeispiel gemäß Fig. 1 und 2 bildet die Abstützung für die Federn 13a einen ersten Anschlag 14 für eine Kante 13c des Verbindungsgliedes 13. Dichtungen 15, 16 dichten den Druckraum 11 gegen die Atmosphäre ab.

Die Vorsprünge 13a, 13b sind über den gesamten Umfang des Verbindungsgliedes 13, unter Einhaltung eines gleichmäßigen Abstandes untereinander verteilt, so daß die Gesamtwirkung der einzelnen Federn 13a die Wirkung einer Tellerfeder darstellen, welche die großen Kräfte besitzt, die als Rückstellkraft erforderlich sind, was insbesondere bei hydraulisch betätigten Scheibenbremsen eine wesentliche Voraussetzung ist.

Von Vorteil ist es, wenn die als Reibelemente 13b ausgebildeten Vorsprünge des Verbindungsgliedes 13 federnd ausgelegt sind und mit ihren freien Enden in diejenige Bewegungsrichtung zeigen, in die das andere Spreizelement 10 beim Lösen der Bremse gerichtet ist. Durch die federnde Ausgestaltung der Reibelemente 13b werden die Reibkräfte in Spreizrichtung durch Selbstverstärkung erhöht, während bei dem Rückhub eine geringere Reibkraft überwunden werden muß.

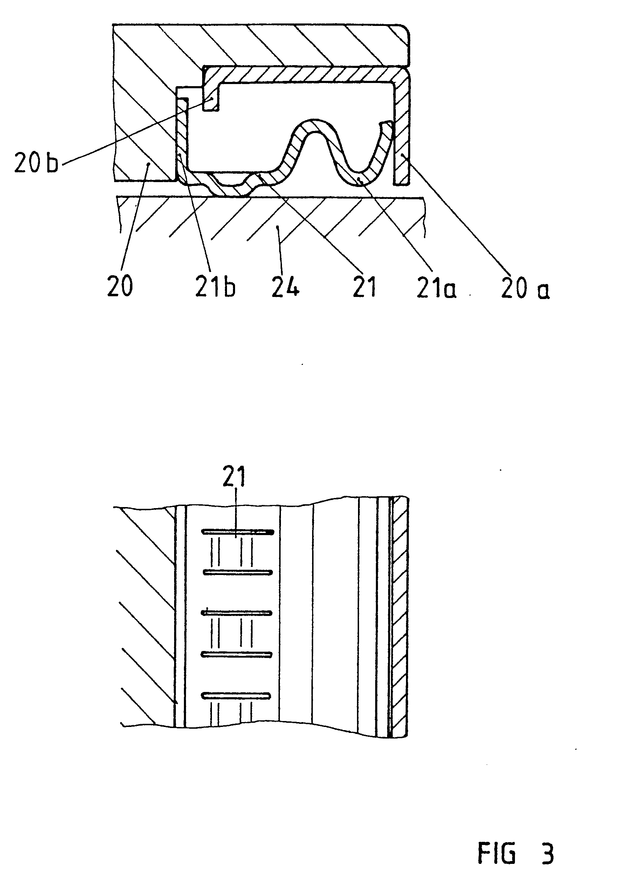

Die Verwendung der in Fig. 3 dargestellten Feder 21a des Verbindungsgliedes 21, deren Federende in Wirkrichtung der resultierenden Federkraft gewellt ist, kann bei einem evtl. notwendigen großen Lüfthub von Vorteil sein. Für die Abstützung der Feder 21a am einen Spreizelement 20 ist ein erster Anschlag 20a des Spreizelementes 20 vorgesehen, der bezüglich der Abstützung der Feder 21a dem ersten Anschlag 14 in Fig. 2 entspricht. Als Anschlag für einen Vorsprung 21b des Verbindungsgliedes 21 ist dagegen ein gesonderter Absatz 20b des einen Spreizelementes 20 vorgesehen. Das andere Spreizelement ist mit der Zahl 24 gekennzeichnet.

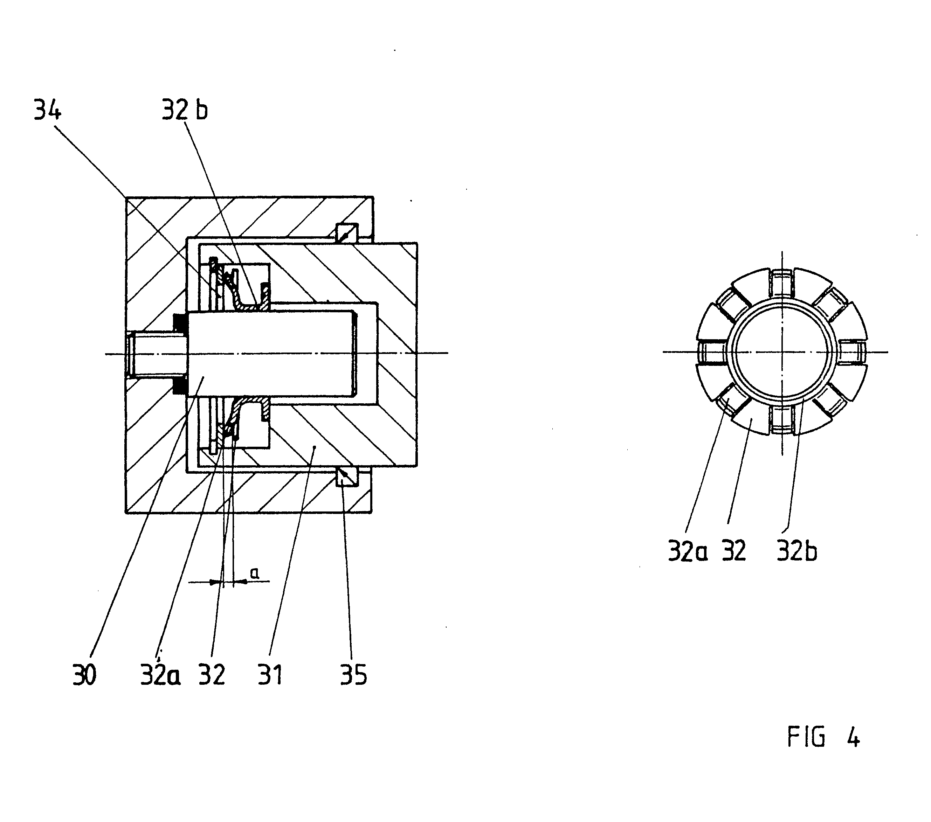

Die Fig. 4 zeigt die Anordnung der Ausgleichseinrichtung in einer Teilbelag-Scheibenbremse, deren Betätigungseinrichtung aus einem zylindrischen Spreizelement 30 und aus einem das Spreizelement 30 konzentrisch umfassenden Spreizelement 31 besteht. Das Verbindungsglied 32 ist als eine das andere Spreizelement 30 umgebende ringförmige Scheibe ausgebildet, deren am Innendurchmesser angeordneten, die Reibelemente bildenden Vorsprünge 32b die Reibverbindung mit dem anderen Spreizelement 30 herstellen und deren Federn 32a aus einzelnen radialen Segmentflächen des Verbindungsgliedes 32 bestehen. Die Abstützung der Federn 32a bildet eine Ringfläche 34, die gleichzeitig als erster Anschlag des Verbindungsgliedes dient. Für die Abdichtung ist ein Dichtring 35 vorgesehen.

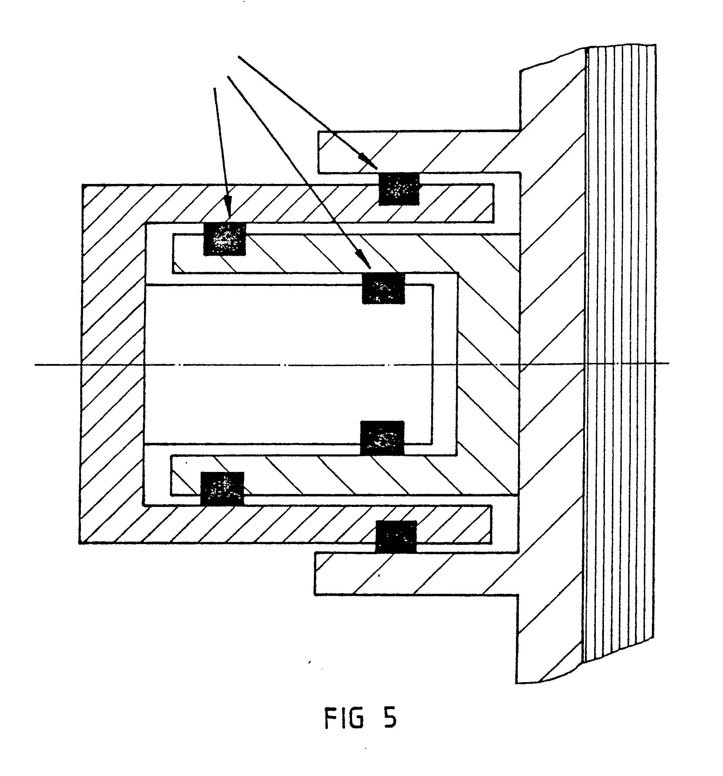

Die in den Fig. 1, 2 und 3 dargestellten Ausgleichseinrichtungen sind überall dort verwendbar, wo die Spreizelemente eine die Bremsbetätigung auslösende Relativbewegung machen. (Siehe Fig. 5, Kennzeichnung durch Pfeile).

Die Funktion der erfindungsgemäßen Ausgleichseinrichtung gemäß der Fig. 1 und 2 ist wie folgt :

Bei einer Betätigung der Bremse bewegen sich die Spreizelemente 9, 10 auseinander. Das über die Reibkraft der Reibelemente 13b mit dem anderen Spreizelement 10 verbundene Verbindungsglied 13 macht die Bewegung des anderen Spreizelementes 10 gegen die Kraft der am ersten Anschlag 14 anliegenden Federn 13a mit. Das Lüftspiel « a » zwischen dem Verbindungsglied 13 und dem ersten Anschlag 14 entspricht dem maximalen Spreizhub der Spreizelemente 9, 10 bei Bremsungen während des normalen Fahrbetriebs.

Wird bei einer Bremsung das Lüftspiel « a » infolge Belagverschleiß überschritten, kommt es zur Anlage der Kante 13c des Verbindungsgliedes 13 an den ersten Anschlag 14, und das andere Spreizelement 10 rutscht unter den Reibelementen 13b in Spreizrichtung durch und legt dabei den Weg zurück, welcher der Abnutzung der Bremsbeläge entspricht. Nach der Bremsung fährt das Verbindungsglied 13 unter Entspannung der Federelemente 13a gegen den zweiten Anschlag zurück und stellt das Lüftspiel « a » wieder ein. Die Betätigungseinrichtung wird entsprechend diesem Lüftspiel wieder zusammengezogen und die Bremse gelöst. Um den Betrag, den das andere Spreizelement 10 gegenüber dem Verbindungsglied 13 während der Bremsbetätigung durchgerutscht ist, kann die Betätigungseinrichtung nicht mehr zusammengezogen werden. Der Bremsbelagverschleiß ist ausgeglichen und der Spreizhub der Spreizelemente 9, 10 ist trotz Verschleiß nicht größer.

Die Spreizelemente 30, 31 gemäß Fig. 4 bewegen sich auseinander. Das über die Reibkraft der Reibelemente 32b mit dem anderen Spreizelement 30 verbundene Verbindungsglied 32 macht die Bewegung des anderen Spreizelements 30 gegen die Kraft der am ersten Anschlag 14 anliegenden Federn 32a mit. Das Lüftspiel « a » zwischen dem Verbindungsglied 32 und dem ersten Anschlag 34 entspricht dem maximalen Spreizhub der Spreizelemente 30, 31 bei Bremsungen während des normalen Fahrbetriebs.

Wird bei einer Bremsung das Lüftspiel « a » infolge Belagverschleiß überschritten, kommt es zur Anlage der Teile 32 und 34, und das Spreizelement 30 rutscht unter den Reibelementen 32b in Spreizrichtung durch und legt dabei den Weg zurück, welcher der Abnutzung der Bremsbeläge entspricht. Nach der Bremsung fährt das Verbindungsglied 32 unter Entspannung der Federelemente 32a gegen den zweiten Anschlag zurück und stellt das Lüftspiel « a » wieder ein. Die Betätigungseinrichtung wird entsprechend diesem Lüftspiel wieder zusammengezogen und die Bremse gelöst. Um den Betrag, den das Spreizelement 30 gegenüber dem Verbindungsglied 32 mit der Reibfläche 32b während der Bremsbetätigung durchgerutscht ist, kann die Betätigungseinrichtung nicht mehr zusammengezogen werden. Der Bremsbelagverschleiß ist ausgeglichen und der Spreizhub der Spreizelemente 30, 31 ist trotz Verschleiß nicht größer.

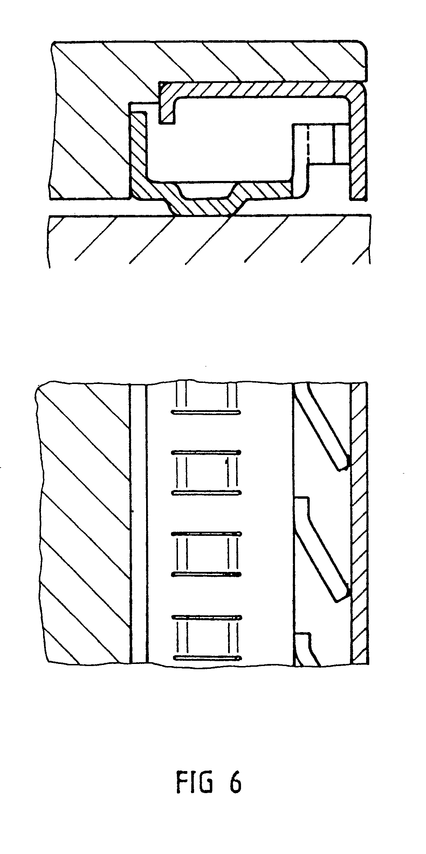

Die in Fig. 6 dargestellten Federelemente haben aufgrund ihrer winkeligen Ausgestaltung eine größere Länge und sind somit im Bereich des an dem Reibelement anliegenden Ende weich, wobei das geschlossene andere Ende der Federelemente eine große Steifheit besitzt. Diese für die Aufgabe dieser Federelemente vorteilhaften Eigenschaften lassen sich bedingt durch deren Formgebung in einem kurzen Bauraum unterbringen.

**Ansprüche**

1. Ausgleichseinrichtung zum Ausgleich einer durch Bremsbelagverschleiß entstandenen Vergrößerung des Lüftspiels einer aus zwei gegeneinander verschiebbaren Spreizelementen bestehenden Betätigungseinrichtung für eine Scheibenbremse, insbesondere für eine druckmittelbetätigte Scheibenbremse, mit folgenden Merkmalen :

a) die Ausgleichseinrichtung wird von einem zwischen den Spreizelementen (9, 10 ; 20, 24 ; 30, 31) angeordneten ringförmigen Verbindungsglied (13, 21, 32) mit wenigstens einem ersten Vorsprung (13a, 21a, 32a) und wenigstens einem zweiten Vorsprung (13b, 32b) gebildet ;

b) das Verbindungsglied (13, 21, 32) ist in dem einen Spreizelement (9, 20, 31) zwischen einem ersten (14, 20b, 34) und einem zweiten Anschlag in Verschieberichtung der Spreizelemente (9, 10 ; 20, 24 ; 30, 31) verschiebbar angeordnet und von dem nach Art einer Federung ausgebildeten ersten Vorsprung (13a, 21a, 32a) in Löserichtung der Spreizelemente gegen den zweiten Anschlag vorgespannt ;

c) das Verbindungsglied (13, 21, 32) ist über ein Reibelement (13b, 32b) mit dem anderen Spreizelement (10, 24, 30) verbunden und über das Reibelement (13b, 32b) in Betätigungsrichtung der Spreizelemente von dem anderen Spreizelement (10, 24, 30) gegen die Kraft des ersten Vorsprungs (13a, 21a, 32a) gegen den ersten Anschlag (14, 20b, 34) mitnehmbar, wobei das Reibelement (13b, 32b) von dem zweiten Vorsprung (13b, 32b) gebildet wird, gekennzeichnet durch folgendes Merkmal :

das Verbindungsglied (13, 21, 32) und die ersten und zweiten Vorsprünge (13a, 13b ; 21a ; 32a, 32b) bestehen aus einem einzigen, aus Flachmaterial gefertigten Stück.

2. Ausgleichseinrichtung nach Anspruch 1, gekennzeichnet durch folgendes Merkmal :

der zweite Vorsprung (13b) des Verbindungsgliedes (13) ist federnd ausgebildet und weist mit seinem freien Ende in diejenige Bewegungsrichtung, in der das andere Spreizelement (10) beim Lösen der Bremse verschoben wird.

3. Ausgleichseinrichtung nach wenigstens einem der vorhergehenden Ansprüche, gekennzeichnet durch folgendes Merkmal :

das Verbindungsglied (13, 32) weist mehrere erste Vorsprünge (13a, 32a) auf, die den gleichen Abstand voneinander haben.

4. Ausgleichseinrichtung nach wenigstens einem der vorhergehenden Ansprüche, gekennzeichnet durch foglendes Merkmal :

das Verbindungsglied (13, 21) weist mehrere zweite Vorsprünge (13b) auf, die den gleichen Abstand voneinander haben.

5. Ausgleichseinrichtung nach wenigstens einem der vorhergehenden Ansprüche, gekennzeichnet durch folgendes Merkmal :

der zweite Vorsprung (13b) des Verbindungsgliedes (13, 21) ist als Vertiefung des Verbindungsgliedes (13, 21) ausgebildet.

6. Ausgleichseinrichtung nach wenigstens einem der vorhergehenden Ansprüche, gekennzeichnet durch folgendes Merkmal :

der erste Vorsprung (21a) des Verbindungsgliedes (21) ist als flaches Teil ausgebildet und in Wirkrichtung der resultierenden Federkraft gewellt.

7. Ausgleichseinrichtung nach wenigstens einem der vorhergehenden Ansprüche, gekennzeichnet durch folgendes Merkmal :

der erste Vorsprung (13a) bildet mit dem als flaches Teil ausgebildeten Verbindungsglied (13) einen Winkel von etwa 90°.

8. Ausgleichseinrichtung nach wenigstens einem der vorhergehenden Ansprüche, wobei das andere Spreizelement (30) zylindrisch ausgebildet ist und das eine Spreizelement (31) das andere Spreizelement (30) konzentrisch umfaßt, gekennzeichnet durch folgende Merkmale :

a) das Verbindungsglied (32) ist als ringförmige Scheibe ausgebildet, die das zylindrische andere Spreizelement (30) umgibt ;

b) die zweiten Vorsprünge (32b) des Verbindungsgliedes (32) sind am Innendurchmesser des Verbindungsgliedes (32) angeordnet ;

c) die ringförmige Scheibe ist als Tellerfeder ausgelegt.

9. Ausgleichseinrichtung nach wenigstens einem der vorhergehenden Ansprüche, wobei die Spreizelemente folgende Merkmale umfassen :

a) die Spreizelemente (9, 10) sind ringförmig ausgebildet ;

b) die Spreizelemente (9, 10) weisen einen U-förmigen Querschnitt auf ;

c) die Spreizelemente (9, 10) sind konzentrisch derart zueinander angeordnet, daß jeweils nur ein Schenkel des U-förmigen Querschnittes des einen Spreizelementes (9) zwischen den beiden Schenkeln des U-förmigen Querschnittes des anderen Spreizelementes (10) liegt, gekennzeichnet durch folgendes Merkmal :

das Verbindungsglied (13) ist bezüglich der Mittelachse der von den beiden Spreizelementen (9, 10) gebildeten Anordnung zwischen den beiden mittleren U-Schenkeln der beiden Spreizelemente (9, 10) angeordnet.

10. Ausgleichseinrichtung nach Anspruch 9, gekennzeichnet durch folgendes Merkmal :

die beiden inneren und äußeren U-Schenkel der bezüglich der Mittelachse von den beiden ringförmigen Spreizelementen (9, 10) gebildeten Anordnung sind jeweils mittels gesonderter Dichtmittel (15, 16) gegeneinander abgedichtet.

11. Ausgleichseinrichtung nach wenigstens einem der vorhergehenden Ansprüche, gekennzeichnet durch folgendes Merkmal :

der erste Vorsprung (13a, 21a, 32a) ist als flaches Teil ausgebildet und in Richtung der resultierenden Federkraft winkelig ausgebildet.

12. Verfahren zur Herstellung einer Ausgleichseinrichtung nach Anspruch 1 mit einem Verbindungsglied (13, 21), das hülsenförmig ausgebildet ist, gekennzeichnet durch folgende Merkmale :

a) an ein flaches Bandmaterial werden die ersten und zweiten Vorsprünge (13a, 13b, 21a) angeformt,

b) das Bandmaterial wird hülsenförmig gebogen und zusammengefügt.

**Claims**

1. Compensating device for compensating for an enlargement, resulting from wear of the brake lining, of the clearance of an actuating device for a disc brake comprising two expansion elements that can be displaced with respect to one another, especially for a pressure medium actuated disc brake, having the following features :

a) the compensating device is formed by an annular connecting member (13, 21, 32) which is arranged between the expansion elements (9, 10 ; 20, 24 ; 30, 31) and has at least one first projection (13a, 21a, 32a) and at least one second projection (13b, 32b) ;

b) the connecting member (13, 21, 32) is displaceably arranged on the one expansion element (9, 20, 31) between a first stop (14, 20b, 34) and a second stop in the displacement direction of the expansion elements (9, 10 ; 20, 24 ; 30, 31) and is pre-tensioned against the second stop in the release direction of the expansion elements by the first projection (13a, 21a, 32a) which is designed in the manner of a spring ;

c) the connecting member (13b, 21, 32) is connected by a friction element (13b, 32b) to the other expansion element (10, 24, 30) and, by means of the friction element (13b, 32b) can be carried along in the actuating direction of the expansion elements by the other expansion element (10, 24, 30) against the force of the first projection (13a, 21a, 32a) towards the first stop (14, 20b, 34), the friction element (13b, 32b) being formed by the second projection (13b, 23b), characterised by the following feature :

the connecting member (13, 21, 32) and the first and second projections (13a, 13b ; 21a ; 32a, 32b) comprise a single piece manufactured from sheet material.

2. Compensating device according to claim 1, characterised by the following feature :

the second projection (13b) of the connecting member (13) is constructed as a spring and with its free end points in the direction of movement in which the other expansion element (10) is displaced when the brake is released.

3. Compensating device according to at least one of the preceding claims, characterised by the following feature :

the connecting member (13, 32) has a plurality of first projections (13a, 32a) which are spaced equally from one another.

4. Compensating device according to at least one of the preceding claims, characterised by the following feature :

the connecting member (13, 21) has a plurality of second projections (13b) which are spaced equally from one another.

5. Compensating device according to at least one of the preceding claims, characterised by the following feature :

the second projection (13b) of the connecting member (13, 21) is constructed as an indentation in the connecting member (13, 21).

6. Compensating device according to at least one of the preceding claims, characterised by the following feature :

the first projection (21a) of the connecting member (21) is constructed as a flat part and is wavy in the effective direction of the resulting spring force.

7. Compensating device according to at least one of the preceding claims, characterised by the following feature :

the first projection (13a) forms with the connecting member (13) constructed as a flat part an angle of approximately 90°.

8. Compensating device according to at least one of the preceding claims, the other expansion element (30) being constructed in the form of a cylinder and the one expansion element (31) concentrically encompassing the other expansion element (30), characterised by the following features :

a) the connecting element (32) is constructed as an annular plate which encompasses the cylindrical other expansion element (30) ;

b) the second projections (32b) of the connecting member (32) are arranged on the internal diameter of the connecting member (32) ;

c) the annular plate is constructed as a plate spring.

9. Compensating device according to at least one of the proceding claims, the expansion elements having the following features :

a) the expansion elements (9, 10) are constructed in the form of rings ;

b) the expansion elements (9, 10) each have a U-shaped cross-section ;

· c) the expansion elements (9, 10) are arranged concentrically with respect to one another in such a manner that, in each case, only one leg of the U-shaped cross-section of one expansion element (9) lies between the two legs of the U-shaped cross-section of the other expansion element (10), characterised by the following feature :

with respect to the middle line of the arrangement formed by the two expansion elements (9, 10), the connecting member (13) is arranged between the two central U-legs of the two expansion elements (9, 10).

10. Compensating device according to claim 9, characterised by the following feature :

the two internal and external U-legs with reference to the central axis of the arrangement formed by the two annular expansion elements (9, 10) are each sealed off with respect to one another by means of separate sealing means (15, 16).

11. Compensating device according to at least one of the preceding claims, characterised by the following feature :

the first projection (13a, 21a, 32a) is constructed as a flat part and is constructed at an angle to the direction of the resulting spring force.

12. Method for the manufacture of a compensating device according to claim 1 having a connecting member (13, 21) which is constructed in the form of a sleeve, characterised by the following features :

a) the first and second projections (13a, 13b, 21a) are shaped onto a flat strip material ;

b) the strip material is bent in the form of a sleeve and joined.

## Revendications

1. Dispositif de rattrapage destiné au rattrapage de l'agrandissement du jeu de desserrage, produit par l'usure des garnitures de frein, d'un dispositif d'actionnement, composé de deux éléments écarteurs mobiles en translation l'un par rapport à l'autre, pour un frein à disque, en particulier, pour un frein à disque actionné par un fluide sous pression, possédant les caractéristiques suivantes :

a) le dispositif de rattrapage est composé d'un organe de liaison annulaire (13, 21, 32) disposé entre les éléments écarteurs (9, 10 ; 20, 24 ; 30, 31), comprenant au moins une première saillie (13a, 21a, 32a) et au moins une deuxième saillie (13b, 32b) ;

b) l'organe de liaison (13, 21, 32) est monté mobile en translation dans l'un des éléments écarteurs (9, 20, 31) dans la direction de translation des éléments écarteurs (9, 10 ; 20, 24 ; 30, 31), entre une première butée (14, 20b, 34) et une deuxième butée, et il est appliqué avec précontrainte contre la deuxième butée, dans le sens du desserrage des éléments écarteurs, par la première saillie (13a, 21a, 32a) réalisée à la façon d'un ressort ;

c) l'organe de liaison (13, 21, 32) est relié à l'autre élément écarteur (10, 24, 30) par l'intermédiaire d'un élément de friction (13b, 32b) et il peut être entraîné en direction de la première butée (14, 20b, 34) par l'intermédiaire de l'élément de friction (13b, 32b), dans le sens de l'actionnement des éléments écarteurs, par ledit autre élément écarteur (10, 24, 30), à l'encontre de la force de la première saillie (13a, 21a, 32a), l'élément de friction (13b, 32b) étant formé par la deuxième saillie (13b, 32b), caractérisé par la caractéristique suivante :

l'organe de liaison (13, 21, 32) et les premières et deuxièmes saillies (13a, 13b ; 21a ; 32a, 32b) sont composées d'une seule pièce fabriquée en matière plate.

2. Dispositif de rattrapage selon la revendication 1, caractérisé par la caractéristique suivante :

la deuxième saillie (13b) de l'organe de liaison (13) est de constitution élastique et pointe par son extrémité libre dans le sens du mouvement dans lequel l'autre élément écarteur (10) est repoussé lors du desserrage du ressort.

3. Dispositif de rattrapage selon au moins l'une des revendications précédentes, caractérisé par la caractéristique suivante :

l'organe de liaison (13, 32) présente plusieurs premières saillies (13a, 32a) qui sont disposées à la même distance les unes des autres.

4. Dispositif de rattrapage selon au moins l'une des revendications précédentes, caractérisé par la caractéristique suivante :

l'organe de liaison (13, 21) présente plusieurs deuxièmes saillies (13b) qui sont disposées à la même distance les unes des autres.

5. Dispositif de rattrapage selon au moins une des revendications précédentes, caractérisé par la caractéristique suivante :

la deuxième saillie (13b) de l'organe de liaison (13, 21) est constituée par un enfoncement de l'organe de liaison (13, 21).

6. Dispositif de rattrapage selon au moins l'une des revendications précédentes, caractérisé par la caractéristique suivante :

la première saillie (21a) de l'organe de liaison (21) est constituée par un élément plat et elle est ondulée dans la direction de l'action de la force élastique résultante.

7. Dispositif de rattrapage selon au moins l'une des revendications précédentes, caractérisé par la caractéristique suivante :

la première saillie (13a) forme un angle d'environ 90° avec l'organe de liaison (13) réalisé sous la forme d'un élément plat.

8. Dispositif de rattrapage selon au moins l'une des revendications précédentes, dans lequel ledit autre élément écarteur (30) est de configuration cylindrique et où le premier élément écarteur (31) entoure concentriquement ledit autre élément écarteur (30), caractérisé par les caractéristiques suivantes :

a) l'organe de liaison (32) est constitué par un disque annulaire qui entoure ledit autre élément écarteur cylindrique (30) ;

b) les deuxièmes saillies (32b) de l'organe de liaison (32) sont disposées au niveau du diamètre intérieur de l'organe de liaison (32) ;

c) le disque annulaire constitue un ressort assiette.

9. Dispositif de rattrapage selon au moins l'une des revendications précédentes, dans lequel les éléments écarteurs possèdent les caractéristiques suivantes :

a) les éléments écarteurs (9, 10) sont de forme annulaire ;

b) les éléments écarteurs (9, 10) présentent une section en U ;

c) les éléments écarteurs (9, 10) sont disposés concentriquement l'un à l'autre de telle manière qu'une seule branche de la section en U d'un élément écarteur (9) se trouve entre les deux branches de la section en U de l'autre élément écarteur (10), caractérisé par la caractéristique suivante :

l'organe de liaison (13) est disposé entre les deux branches de U centrales des deux éléments écarteurs (9, 10), relativement à l'axe central de l'arrangement formé par les deux éléments écarteurs (9, 10).

10. Dispositif de rattrapage selon la revendication 9, caractérisé par la caractéristique suivante :

les deux branches de U intérieures et extérieures de l'arrangement formé par rapport à l'axe central par les deux éléments écarteurs annulaires (9, 10) sont montées à joint étanche les unes par rapport aux autres à l'aide de moyens d'étanchéité (15, 16) séparés dans chaque cas.

11. Dispositif de rattrapage selon au moins l'une des revendications précédentes, caractérisé par la caractéristique suivante :

la première saillie (13a, 21a, 32a) est constituée par une pièce plate et est de configuration inclinée en direction de la force élastique résultante.

12. Procédé de fabrication d'un dispositif de rattrapage selon la revendication 1, comprenant un organe de liaison (13, 21) qui est en forme de manchon, caractérisé par les caractéristiques suivantes :

a) les premières et les deuxièmes saillies (13a, 13b, 21a) sont formées sur une matière en bande plate ;

b) la matière en bande est roulée en forme de manchon et assemblée.

1  5  3  9  15  7  12  10  11  4  6  2  13  16  8

α

0 057 883

FIG 1

13 a

9    10    10 a    13    13 b    13 c    14

ZUSPANNUNG

13 a

13

13 b

FIG 2

2

20 b

20        21b        24        21        21a        20 a

21

FIG 3

34      32 b

30    32a  32   31    35

a

32a  32   32b

FIG 4

0 057 883

4

FIG 5

FIG 6